# EUROPEAN PATENT APPLICATION

(11) **EP 4 708 639 A1**
(43) Date of publication of application: **11.03.2026**
(21) Application number: 24199537.2
(22) Date of filing: 10.09.2024
(51) Int. Cl.: H02K 3/24, H02K 1/20, H02K 9/197

(54) **E-MACHINE SYSTEM WITH WINDINGS ARRANGEMENT HAVING COOLING PASSAGES**

(71) Applicant: Garrett International I Inc., Torrance California 90504 (US)
(72) Inventor: Tomanec, Filip, Torrance, 90504 (US); Schachl, David, Torrance, 90504 (US); Slama, David, Torrance, 90504 (US); Yang, Tsuang, Torrance, 90504 (US); Quinn, Cheney, Torrance, 90504 (US); Krejci, Jaroslav, Torrance, 90504 (US)
(74) Representative: Ingrassia, Fisher & Lorenz UK Ltd.

(57) **Abstract**

An e-machine with a stator core has a slot and winding members with longitudinal segments that are received therein. The longitudinal segments are arranged in a radial arrangement with a first cross-sectional profile a second cross-sectional profile of the segments in the slot. The first cross-sectional profile and the second cross-sectional profile respectively include a first radial side and a second radial side facing opposite radially with respect to the longitudinal axis. The first cross-sectional profile and the second cross-sectional profile respectively includes a transverse side disposed at an acute angle relative to the first radial side, respectively, and disposed at an obtuse angle relative to the second radial side, respectively. The first cross-sectional profile is inverted relative to the second cross-sectional profile with the transverse side of the first cross-sectional profile and the transverse side of the second cross-sectional profile cooperatively defining a fluid flow channel through the slot.

## Description

### TECHNICAL FIELD

The present disclosure relates, generally, to an e-machine and, more particularly, to an e-machine system with a windings arrangement having cooling passages.

### BACKGROUND

In some systems, for example, E-machines, such as electric motors, electric generators, and combination motor/generators, are provided for a variety of uses. For example, electric traction motors are proposed for electric vehicles, locomotives, and the like.

E-machine systems may generate heat during operation, may operate in high-temperature environments, etc. Elevated temperatures may hinder performance and/or cause other disadvantages. Thus, e-machine systems are proposed that include cooling features. However, providing such cooling features remains challenging. There may be detrimental increases in costs, part count, device complexity, size, bulkiness, and/or weight if these cooling features are included. These features may also increase manufacturing difficulty, costs, etc.

Thus, there remains a need for an e-machine system that provides effective cooling. There remains a need for these e-machine systems, wherein the cooling features are provided in a relatively compact, low-weight package. There is also a need for such an e-machine system that also provides high manufacturing efficiency for reduced costs and manufacturing time.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an e-machine is disclosed that includes a stator core defining a longitudinal axis and having a first axial end and a second axial end that are separated along the longitudinal axis. The stator core has a slot, and the slot extends along the longitudinal axis between the first axial end and the second axial end. Moreover, the e-machine includes a plurality of winding members comprising a plurality of longitudinal segments that are received in the slot and that extend between the first axial end and the second axial end. The plurality of longitudinal segments are arranged in a radial arrangement with a first cross-sectional profile of a first one of the plurality of longitudinal segments and a second cross-sectional profile of a second one of the plurality of longitudinal segments arranged radially within the slot. The first cross-sectional profile and the second cross-sectional profile respectively include a first radial side and a second radial side facing opposite radially with respect to the longitudinal axis. The first cross-sectional profile and the second cross-sectional profile respectively includes a transverse side that is disposed at an acute angle relative to the first radial side, respectively, and that is disposed at an obtuse angle relative to the second radial side, respectively. The first cross-sectional profile is inverted relative to the second cross-sectional profile with the transverse side of the first cross-sectional profile and the transverse side of the second cross-sectional profile cooperatively defining a fluid flow channel through the slot along the longitudinal axis.

In another embodiment, a method of manufacturing an e-machine is disclosed. The method includes providing a stator core having a longitudinal axis and having a first axial end and a second axial end that are separated along the longitudinal axis. The stator core has a slot, and the slot extends along the longitudinal axis between the first axial end and the second axial end. Also, the method includes inserting a plurality of winding members in the slot. The plurality of winding members comprise a plurality of longitudinal segments that are received in the slot to extend between the first axial end and the second axial end. Inserting the winding members includes arranging the plurality of longitudinal segments in a radial arrangement with a first cross-sectional profile of a first one of the plurality of longitudinal segments and a second cross-sectional profile of a second one of the plurality of longitudinal segments arranged radially within the slot. The first cross-sectional profile and the second cross-sectional profile respectively include a first radial side and a second radial side face opposite radially with respect to the longitudinal axis. The first cross-sectional profile and the second cross-sectional profile respectively including a transverse side that is disposed at an acute angle relative to the first radial side, respectively, and that is disposed at an obtuse angle relative to the second radial side, respectively, the first cross-sectional profile being inverted relative to the second cross-sectional profile with the transverse side of the first cross-sectional profile and the transverse side of the second cross-sectional profile cooperatively defining a fluid flow channel through the slot along the longitudinal axis.

In a further embodiment, an e-machine system is disclosed that includes an e-machine and a fluid coolant system that is fluidly coupled to the e-machine and configured to circulate fluid coolant therethrough. The e-machine includes a stator core defining a longitudinal axis and having a first axial end and a second axial end that are separated along the longitudinal axis. The stator core has a slot, and the slot extends along the longitudinal axis between the first axial end and the second axial end. The e-machine system also includes a plurality of winding members comprising a plurality of longitudinal segments that are received in the slot and that extend between the first axial end and the second axial end. The plurality of longitudinal segments are arranged in a radial arrangement with a first cross-sectional profile of a first one of the plurality of longitudinal segments and a second cross-sectional profile of a second one of the plurality of longitudinal segments arranged radially within the slot. The first cross-sectional profile and the second cross-sectional profile respectively include a first radial side and a second radial side facing opposite radially with respect to the longitudinal axis. The first cross-sectional profile and the second cross-sectional profile respectively include a transverse side that is disposed at an acute angle relative to the first radial side, respectively, and that is disposed at an obtuse angle relative to the second radial side, respectively, the first cross-sectional profile being inverted relative to the second cross-sectional profile with the transverse side of the first cross-sectional profile and the transverse side of the second cross-sectional profile cooperatively defining a fluid flow channel through the slot along the longitudinal axis. The fluid flow channel is configured to receive the fluid coolant for cooling the e-machine.

Furthermore, other desirable features and characteristics of the present disclosure will become apparent from the subsequent detailed description and the appended claims, taken in conjunction with the accompanying drawings and the preceding background.

### BRIEF DESCRIPTION OF DRAWINGS

The various embodiments will hereinafter be described in conjunction with the following drawing figures, wherein like numerals denote like elements, and wherein:
FIG. 1 is a schematic illustration of an e-machine system according to example embodiments of the present disclosure;
FIG. 2 is an isometric longitudinal section view of a stator member of the e-machine system according to example embodiments;
FIG. 3 is a detail cross-sectional view of the stator member taken along the line 3-3 of FIG. 2 according to example embodiments; and
FIG. 4 is a detail cross-sectional view of the stator member of FIG. 2 according to additional example embodiments.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Broadly, example embodiments disclosed herein include an e-machine system, such as an electric motor system, having features that provide effective cooling for efficient operation of the e-machine. For example, the system may include an e-machine with a stator member having a stator core with a plurality of slots (i.e., grooves, passages, etc.) that extend between a first axial end and a second axial end of the stator core. The slots may extend along a respective longitudinal axis that may be parallel to an axis of rotation of the rotating group of the e-machine. The slots may be arranged (e.g., spaced equally) about the axis of rotation. Also, the slots may be open to the inner radial surface of the stator core.

The stator member may also include a plurality of stator winding members comprising a plurality of longitudinal segments that are received in respective ones of the slots. In at least one of the slots, there may be a group of the longitudinal segments arranged in a radial arrangement relative to the longitudinal axis. The longitudinal segments may be stacked, layered, or otherwise arranged in the radial direction within the slot.

These longitudinal segments may have a cross-sectional profile taken normal to the longitudinal axis of the slot. The shape, size, arrangement, and/or other characteristics of the cross-sectional profiles may define fluid coolant flow channels along the slot and amongst the longitudinal segments. The e-machine system may also include a fluid coolant system that may provide a cooling fluid (refrigerant, coolant, oil, air, other gas, other liquid, etc.) to the e-machine. This fluid may be provided to the slots to flow amongst the longitudinal segments of the windings. Thus, cooling fluid may be provided directly to the windings and through the stator core for effective cooling. Coolant may be provided directly within the slot and may flow from the first axial end to the second axial end of the stator core, thereby cooling the e-machine.

In some embodiments, the cross-sectional profiles of the longitudinal segments may respectively include radial sides facing generally in a radial direction. The cross-sectional profiles may also respectively include a transverse side that is angled relative to the radial sides, for example, to define an obtuse angle and an acute angle therewith. Furthermore, the cross-sectional profiles may be inverted relative to neighboring ones of the profiles. Accordingly, gaps, openings, channels, etc. may be defined, for example, cooperatively, between neighboring ones of the transverse sides of the cross-sectional profiles. There may be a plurality of these gaps, openings, channels, etc. with predetermined shapes, dimensions, positions, etc. for defining fluid coolant flow channels through the stator core and amongst the longitudinal segments. The cooling channels may be defined on both sides of the radial arrangement of longitudinal segments such that the flow of coolant may be distributed and balanced across several areas of the windings.

The cross-sectional profiles of the longitudinal segments of the stator core winding members and their arrangement within the slots may provide certain advantages. The e-machine may be effectively cooled for efficient operation of the e-machine. Also, the winding members may be robustly supported (e.g., against vibration loads) due to the cross-sectional profiles of the winding members and their radial arrangement within the slots. Furthermore, the cross-sectional profiles of the winding members may be advantageous, for example, by facilitating manufacture of the e-machine. The winding members may be manufactured efficiently. For example, the winding members may be insulated in an efficient manner and/or the cross-sectional profiles of the winding members may facilitate welded attachments to other components of the stator member. Additionally, the cross-sectional profiles may provide handling advantages during manufacture and assembly of the e-machine. Moreover, the e-machine may be relatively compact and lightweight. The e-machine may also provide manufacturing benefits, such as a relatively low part count, as well as ease of assembly, installation, repair, and replacement. In some embodiments, the cross-sectional profiles of the winding members may include one or more flat sides that, with other winding members, cooperatively define cooling channels. The flat sides may be highly manufacturable, they may provide useful surfaces that can be easily insulated. Gaps between winding members may be highly controllable and held to high tolerancing. Also, these surfaces may lie flat and overlap each other within the stator core slots, thereby providing robust support (e.g., against vibration loads). These and other features and advantages are discussed further below.

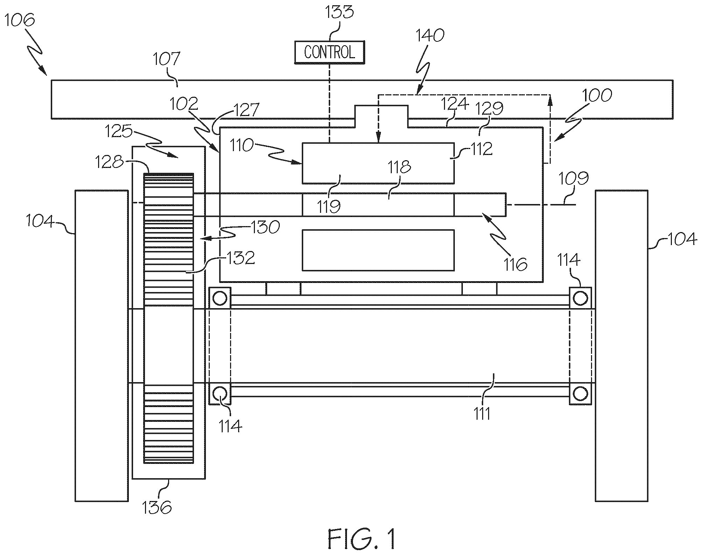

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure.

Generally, the e-machine system 100 may include a housing 125. The housing 125 may include an e-machine housing 124 with a cavity 129 therein. The e-machine system 100 may also include an e-machine 110 that is received in the cavity 129 and housed within the e-machine housing 124.

The e-machine 110 may be an electric motor 112 in some embodiments. For example, in some embodiments, the electric motor 112 may be an AC three-phase electric motor. However, it will be appreciated that the e-machine 110 may be configured otherwise. The e-machine 110 may be configured as an electric generator in some embodiments. Furthermore, the e-machine 110 may be operable in some modes as a motor and in additional modes as a generator. The e-machine 110 may include a rotor member 118 and a stator member 119 that are housed within the cavity 129 of the e-machine housing 124.

The rotor member 118 may be supported on a shaft 116, and the shaft 116 may be supported for rotation about an axis 109 (i.e., rotation axis 109) within the e-machine housing 124. The stator member 119 of the e-machine 110 may be fixed within the e-machine housing 124 and may surround the rotor member 118 and the shaft 116. In embodiments in which the e-machine 110 is an electric motor 112, the shaft 116 may be referred to as an output shaft 116 of the electric motor 112. In some embodiments, a gear connection member 128 (e.g., a gear, a spline on the shaft 116, or other part with gear teeth features) may be operably supported on the shaft 116.

Also, the e-machine system 100 may include a transmission 130. The transmission 130 may generally include a geartrain 132 that is housed within a gearbox housing 136 of the housing 125. The gearbox housing 136 may be attached (e.g., fixed) to a side wall 127 of the e-machine housing 124.

The geartrain 132 may be of any suitable type. The geartrain 132 may operatively connect the e-machine 110 and the axle 111 and may transmit power therebetween. The e-machine 110 may be coupled to the wheels 104 via the transmission 130. The geartrain 132 may be attached to the gear connection member 128 and to the axle 111. The gearbox housing 136 and the e-machine housing 124 may be moveably supported on the axle 111 by one or more bearings 114 (e.g., a bearing sleeve, suspension tube, etc.) such that the axle 111 may rotate relative thereto.

During operation, the electric motor 112 may rotatably drive the shaft 116 and the gear connection member 128 supported thereon. This rotational power may transfer to the geartrain 132, which may transmit the power to the axle 111 to rotate the wheels 104 and propel the vehicle 106. These operations may be controlled by a control system 133. The control system 133 may control speed of the motor 112 and/or other functions of the motor 112.

Furthermore, the e-machine system 100 may include a fluid coolant system 140. The fluid coolant system 140 may be configured for circulating a fluid, such as a fluid coolant. The fluid may be a liquid, a coolant oil, etc.

The fluid coolant system 140 may be coupled to the stator member 119 as will be discussed. Accordingly, the fluid coolant system 140 and the stator member 119 may include features that provide cooling to the stator member 119. This may, in turn, provide cooling to the rotor member 118, to bearings, and/or to other adjacent areas of the e-machine 110.

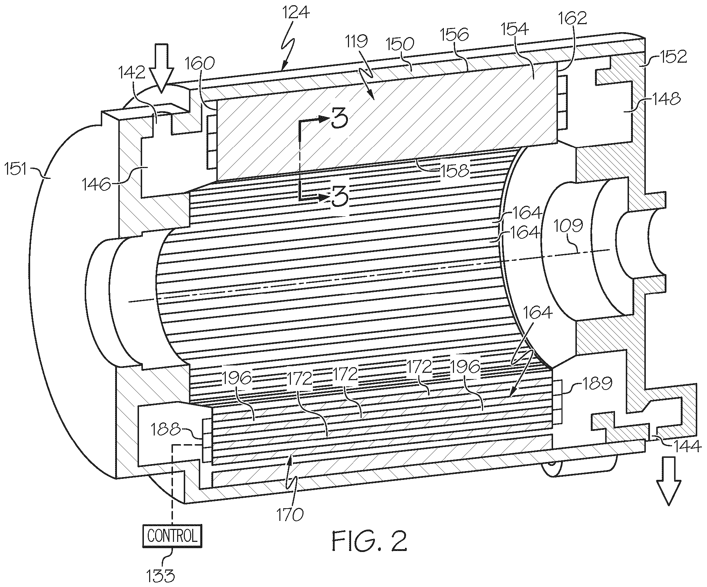

As represented in FIG. 2, the e-machine housing 124 may be cylindrical and hollow. The e-machine housing 124 may include an outer radial wall 150, a first axial wall 151, and a second axial wall 152. The outer radial wall 150 may extend in a circumferential direction about the axis of rotation 109 and may extend longitudinally between the first axial wall 151 and the second axial wall 152. The first axial wall 151 and second axial wall 152 may be disc-like and may extend transverse to the axis 109. In some embodiments, the outer radial wall 150 and first axial wall 151 may be integrally connected so as to be one-piece and unitary whereas the second axial wall 152 may be removably attached to the other end of the outer radial wall 150. The outer radial wall 150, first axial wall 151, and second axial wall 152 may collectively define the cavity 129. The cavity 129 may be substantially cylindrical and may be centered on the axis 109.

The stator member 119 may include a stator core 154. The stator core 154 may be hollow and cylindrical so as to include an outer radial surface 156, an inner radial surface 158, a first axial end 160, and a second axial end 162. The stator core 154 may comprise a plurality of disc-like laminations that are stacked together and arranged along the axis 109 to collectively define the outer radial surface 156 and the inner radial surface 158.

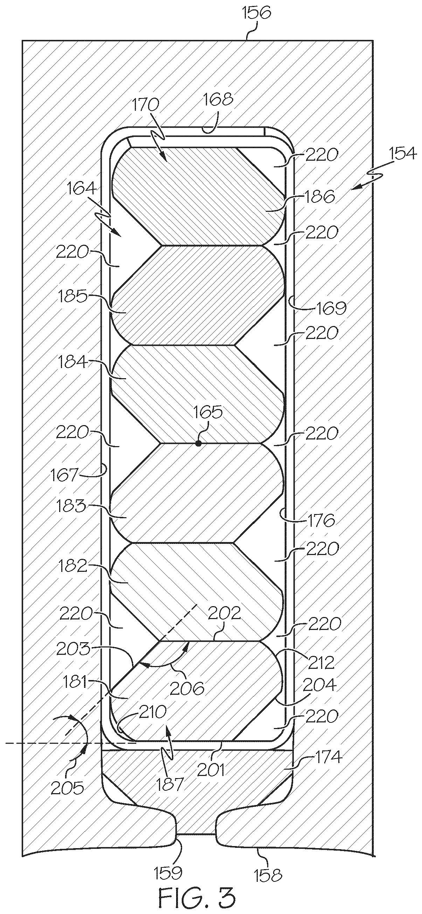

As shown in FIGS. 2 and 3, the stator core 154 may include a plurality of slots 164 (i.e., grooves, passages, etc.). It will be appreciated that the laminations of the stator core 154 may individually include notches that, when stacked together, collectively define the slots 164. As shown in FIG. 2, the plurality of slots 164 may be disposed in spaced arrangement (e.g., equally spaced) about the axis of rotation 109.

One of the slots 164 is shown in detail in FIG. 3 and may be representative of the others. As shown, the slot 164 may be somewhat rectangular. As shown in FIG. 3, the slot 164 may be defined by two substantially radially-extending inner slot surfaces 167, 169 and a recessed inner slot surface 168 that faces inwardly toward the axis 109. The slot 164 may have a longitudinal axis 165 that is substantially centered therein and that extends between the first axial end 160 and the second axial end 162 of the stator core 154. The longitudinal axis 165 may be substantially parallel to the axis of rotation 109. As represented in FIG. 2, the slot 164 may be open at the first axial end 160 and the second axial end 162 of the stator core 154. Also, in some embodiments, the slot 164 may be open at the inner radial surface 158. In other words, the slot 164 may include an open inner radial end 159 at an inner radial area of the stator core 154 (including the inner radial surface 158). The slot 164 may narrow significantly at the open inner radial end 159 as compared to areas of the slot 164 disposed further outward radially on the stator core 154.

The e-machine 110 may further include one or more plug members 174 that are received in respective ones of the slots 164. As shown in FIG. 3, the plug member 174 may be a strip with a wedge-shaped cross-section that may cover over, may substantially seal off, and/or may be received in the slot 164 at the open inner radial end 159 thereof. The plug member 174 may be resilient and may be wedged within the inner radial end 159 of the slot 164. The plug member 174 may also extend (e.g., continuously) along the axis 165 to seal off the slot 164 on the inner radial end 159. In some embodiments, the plug member 174 may be constructed from and/or include a polymeric material.

Additionally, the e-machine 110 may include one or more slot liners 176 that are received in respective ones of the slots 164. As shown in FIG. 3, the slot liner 176 may be a relatively thin, sheet-like member that bends, folds, wraps, etc. about the interior surfaces of the slot 164 to cover over the inner slot surfaces 167, 168, 169 and the plug member 174. In some embodiments, the slot liner 176 may be constructed from and/or include a polymeric material.

The stator member 119 may further include a plurality of windings 170 (i.e., winding members, wiring members, etc.). The windings 170 may be electrically conductive and may comprise a plurality of elongate segments (e.g., wires, etc.). The windings 170 may be made of and/or may include copper in some embodiments. The windings 170 may be covered with an electrically insulating material. During operation of the motor 112, alternating current (AC) power may be applied to the stator member 119, and the windings 170 may generate a rotating magnetic field for driving the rotor member 118 and shaft 116 in rotation about the axis 109.

The windings 170 may include a plurality of longitudinal segments 172 that are received in respective ones of the slots 164 of the stator core 154 and that extend generally along the axis 165 of the respective slot 164 between the first axial end 160 and the second axial end 162. The longitudinal segments 172 may be elongate, substantially straight, and may extend longitudinally parallel to the axis 165 and the axis 109. As will be discussed, the cross-sectional profiles of the longitudinal segments 172 may be arranged radially (i.e., disposed in a radial arrangement 187) within the respective slot 164.

As shown schematically in FIG. 2, the windings 170 may also include a plurality of first end members 188 proximate the first axial end 160 of the stator core 154 and a plurality of second end members 189 proximate the second axial end 162. The first end members 188 may connect respective pairs of longitudinal segments 172 in different slots 164. Thus, the first end members 188 may be disposed outside the stator core 154 on the first axial end 160 and may extend partially about the axis 109. In some embodiments, at least one of the first end members 188 may extend away from the first axial end 160 to electrically connect to the control system 133. Similarly, the second end members 189 may connect respective pairs of the longitudinal segments 172 in different slots 164. The second end members 189 may be disposed outside the stator core 154 at the second axial end 162. The first and second end members 188, 189 may electrically connect ones of the longitudinal segments 172 in a known manner for operation of the stator member 119 and for operative connection to the control system 133.

Thus, the plurality of first end members 188, the longitudinal segments 172, and the second end members 189 may be electrically connected together to collectively define the windings 170 of the stator member 119. Also, the windings 170 may be supported by the stator core 154 with the longitudinal segments 172 disposed compactly within the slots 164.

As shown in FIG. 3, the longitudinal segments 172 disposed within the slot 164 may include a first longitudinal segment 181, a second longitudinal segment 182, a third longitudinal segment 183, a fourth longitudinal segment 184, a fifth longitudinal segment 185, and a sixth longitudinal segment 186 in one of the slots 164. The longitudinal segments 181-186 may be arranged in a radial arrangement 187 within the slot 164. In the radial arrangement 187, the segments 181-186 may be stacked and disposed in sequence along the radial direction with the first longitudinal segment 181 closest to the axis 109, the second longitudinal segment 182 spaced further outward radially, the third longitudinal segment 183 spaced further outward, the fourth longitudinal segment 184 spaced further outward, the fifth longitudinal segment 185 spaced further outward, and the sixth longitudinal segment 186 spaced furthest outward in the radial direction from the axis 109 within the slot 164. The slot liner 176 may be wrapped about the longitudinal segments 181-186, and this wrapped collection may be received in the slot 164 with the liner 176 disposed between the radial arrangement 187 and the inner slot surfaces 167, 168, 169 of the slot 164. Also, the liner 176 may be disposed between the first longitudinal segment 181 and the plug member 174 in some embodiments.

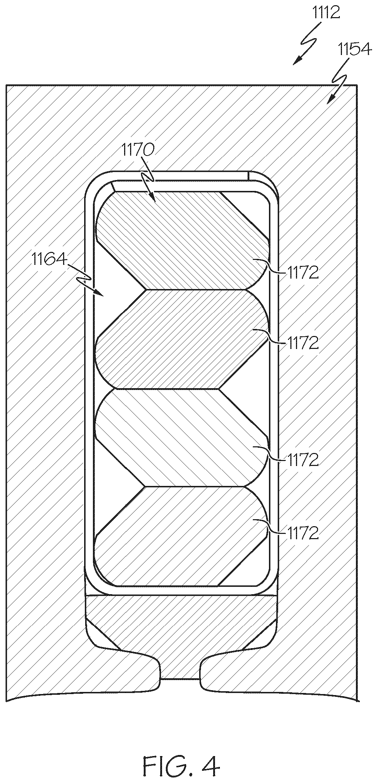

Although there are six longitudinal segments 181-186 of the windings 170 in the embodiments of FIG. 3, it will be appreciated that the windings 170 may include a different number of longitudinal segments 172 in the slots 164, depending on the configuration of the motor 112. There may be at least four longitudinal segments 172 within the slots 164 in various embodiments of the present disclosure. Additional embodiments of the motor 1112 are represented in FIG. 4. In FIG. 4, reference numbers corresponding to those of FIGS. 2 and 3 are increased by 1000 to indicate corresponding features of the embodiments of FIGS. 2 and 3. As shown in FIG. 4, the windings 1170 may include four longitudinal segments 1172 within the slot 1164 of the stator core 1154. Accordingly, the embodiments of FIG. 4 may be included in a two-phase motor 1112.

Referring back to FIG. 3, the shape, arrangement, and other features of the longitudinal segments 172 will be further discussed according to embodiments of the present disclosure. It will be understood that the embodiments of FIG. 4 may include similar and corresponding features as will be appreciated by those having ordinary skill in the art.

In some embodiments, the first longitudinal segment 181 may have a first cross-sectional profile as shown in FIG. 3. The second longitudinal segment 182 may have a second cross-sectional profile as shown in FIG. 3. As shown, these cross-sectional profiles (e.g., rhombic cross-sectional profiles) may substantially match and may be inverted relative to each other along the radial direction. In some embodiments, the cross-sectional profiles may be quadrilateral (e.g., resembling a rhomboid or a rhombic in shape). Thus, the cross-sectional profiles may include four substantially flat sides with two sides disposed at an obtuse angle and two sides disposed at an acute angle. However, it will be appreciated that one or more areas in the cross-sectional profile may be somewhat rounded without departing from the scope of the present disclosure. The cross-sectional profile(s) may include four flat sides and two convexly rounded corners/edges. The rhombic cross-sectional profiles of each of the longitudinal segments 181-186 may substantially match and may be sequentially inverted in the radial direction in the radial arrangement 187.

More specifically, in some embodiments, the cross-sectional profile of the first longitudinal segment 181 may include a first radial side 201, a second radial side 202, a first transverse side 203, and a second transverse side 204, each of which may be substantially flat. The first radial side 201 may face radially toward the axis 109, and the second radial side 202 may face in the opposite direction, radially away from the axis 109. The first radial side 201 and the second radial side 202 may be substantially parallel in some embodiments. The first transverse side 203 may extend between the first and second radial sides 201, 202 and may be disposed at an acute angle 205 relative to the first radial side 201 and may be disposed at an obtuse angle 206 relative to the second radial side 202. The second transverse side 204 may extend between the first and second radial sides 201, 202 and may be substantially parallel to the first transverse side 203 and may face in the opposite direction therefrom. Furthermore, the cross-sectional profile of the first longitudinal segment 181 may include a rounded convex edge 210 between the first radial side 201 and the first transverse side 203. There may be a corresponding rounded convex edge 212 between the second radial side 202 and the second transverse side 204.

The longitudinal segment 181 may be formed, shaped, and provided with the cross-sectional profile of FIG. 3 in a number of ways without departing from the scope of the present disclosure. For example, wire may be extruded or drawn through a die to shape the cross-sectional profile of the longitudinal segment 181. Once shaped, the longitudinal segment 181 may be covered with an electrically insulative material and then assembled with the other windings 170 on the stator core 154.

The second longitudinal segment 182 may have a second cross-sectional profile as shown in FIG. 3, which is substantially similar to that of the first longitudinal segment 181. However, these neighboring cross sectional profiles may be inverted relative to each other about an axis that is parallel to the slot axis 165. Each of the longitudinal segments 181-186 in the slot 164 may be inverted sequentially in this manner along the radial direction as shown in FIG. 3.

Accordingly, the first transverse side 203 and the opposing transverse side of the second longitudinal segment 182 may be spaced apart from each other and from the opposing liner 176 to cooperatively define a fluid flow channel 220 through the slot 164 along the slot axis 165. Additional gaps within the slot 164 may define flow channels 220 similarly throughout the slot 164 on both tangential sides of the radial arrangement 187 as shown in FIG. 3 due to the alternating and inverted longitudinal segments 181-186 in the radial direction within the slot 164. The fluid flow channels 220 may extend along the axis 165 and substantially parallel to the axis of rotation 109. The fluid flow channels 220 may extend continuously and uninterrupted from the first axial end 160 to the second axial end 162 of the stator core 154.

The fluid coolant system 140 may be fluidly connected to the flow channels 220 of the stator member 119 to provide fluid coolant thereto. As shown in FIG. 2, the e-machine housing 124 may include a coolant inlet 142 and a coolant outlet 144. The coolant inlet 142 and the coolant outlet 144 may be spaced apart along the axis 109. The coolant inlet 142 may extend radially into the first axial wall 151. The coolant outlet 144 may extend radially out of the second axial wall 152. The coolant inlet 142 and the coolant outlet 144 may be disposed on opposite sides of the axis 109.

The inlet 142 may extend into the first axial wall 151 and may fluidly connect to an annular first cavity 146 that extends about the axis 109 and about the first axial end 160 of the stator core 154. The second axial wall 152 may include a similar annular second cavity 148 that extends about the second axial end 162 of the stator core 154. The outlet 144 may be fluidly connected to the second cavity 148.

The first cavity 146 and the second cavity 148 may be fluidly connected to the slots 164 and, thus, to the fluid flow channels 220. Accordingly, during operation, fluid supplied to the inlet 142 may flow into the first cavity 146. This coolant flow may diverge into the plurality of fluid flow channels 220 within the slots 164 and flow between and amongst the longitudinal segments 181-186. This fluid may receive heat as it flows longitudinally through the slots 164 and may flow into the second cavity 148 before exiting via the outlet 144.

Accordingly, fluid coolant may flow directly over, between, and amongst the arrangement 187 of longitudinal segments 181-186 as the coolant flows longitudinally along the stator member 119. The fluid coolant system 140 may effectively cool the motor 112. Furthermore, the e-machine system 100 may be compact and lightweight. The windings may be robustly supported within the stator core. Also, the part count may be relatively low, and the e-machine system 100 may be manufactured with high efficiency. As shown in the embodiments of FIGS. 3 and 4, the cross-sectional profiles of the winding members may include respective flat sides that, with other winding members, cooperatively define the cooling channels 220. The flat sides may be highly manufacturable, they may provide useful surfaces that can be easily insulated. Gaps between winding members may be highly controllable and held to high tolerancing. Also, these surfaces may lie flat and overlap each other within the stator core slots 164, 1164, thereby providing robust support for the windings.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the present disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. The terms "substantially" and "about" are used herein, for example, to account for reasonable manufacturing tolerancing.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It is understood that various changes may be made in the function and arrangement of elements described in an exemplary embodiment without departing from the scope of the disclosure as set forth in the appended claims.

## Claims

1. An e-machine comprising:
a stator core defining a longitudinal axis and having a first axial end and a second axial end that are separated along the longitudinal axis, the stator core having a slot, the slot extending along the longitudinal axis between the first axial end and the second axial end; and
a plurality of winding members comprising a plurality of longitudinal segments that are received in the slot and that extend between the first axial end and the second axial end, the plurality of longitudinal segments arranged in a radial arrangement with a first cross-sectional profile of a first one of the plurality of longitudinal segments and a second cross-sectional profile of a second one of the plurality of longitudinal segments arranged radially within the slot, the first cross-sectional profile and the second cross-sectional profile respectively including a first radial side and a second radial side facing opposite radially with respect to the longitudinal axis, the first cross-sectional profile and the second cross-sectional profile respectively including a transverse side that is disposed at an acute angle relative to the first radial side, respectively, and that is disposed at an obtuse angle relative to the second radial side, respectively, the first cross-sectional profile being inverted relative to the second cross-sectional profile with the transverse side of the first cross-sectional profile and the transverse side of the second cross-sectional profile cooperatively defining a fluid flow channel through the slot along the longitudinal axis.

2. The e-machine of claim 1, wherein the first radial side and the second radial side are flat, wherein the transverse side is flat, and wherein the first cross-sectional profile includes a first rounded corner between the transverse side and the first radial side.

3. The e-machine of claim 1, wherein the first segment has a first rhombic cross-sectional profile and the second segment has a second rhombic cross-sectional profile, the first rhombic cross-sectional profile being inverted relative to the second rhombic cross-sectional profile in the radial arrangement.

4. The e-machine of claim 3, wherein the first rhombic cross-sectional profile and the second rhombic cross-sectional profile match and are inverted in the radial arrangement.

5. The e-machine of claim 4, wherein each of the segments in the radial arrangement share a common cross-sectional profile and are inverted sequentially in the radial arrangement.

6. The e-machine of claim 1, wherein the first cross-sectional profile includes four flat sides and two rounded corners.

7. The e-machine of claim 1, wherein the slot has an interior surface, and further comprising a slot liner that is disposed in the slot between the plurality of longitudinal segments and the interior surface.

8. The e-machine of claim 7, wherein the transverse side of the first cross-sectional profile, the transverse side of the second cross-sectional profile, and the liner cooperate to define the fluid flow channel.

9. The e-machine of claim 1, wherein the fluid flow channel is a first fluid flow channel, and further comprising a second fluid flow channel cooperatively defined by the first cross-sectional profile and the second cross-sectional profile in the radial arrangement, the first fluid flow channel and the second fluid flow channel disposed on opposite tangential sides of the radial arrangement.

10. The e-machine of claim 1, wherein the radial arrangement includes at least four of the plurality of longitudinal segments.

11. The e-machine of claim 1, wherein the slot has an open inner radial end at an inner radial area of the stator core, and further comprising a plug member that is received in the slot at the open inner radial end.

12. A method of manufacturing the e-machine of claim 1.

13. An e-machine system comprising:
the e-machine of claim 1;
a fluid coolant system that is fluidly coupled to the e-machine and configured to circulate fluid coolant therethrough.
